# EUROPÄISCHE PATENTSCHRIFT

(11) **EP 3 594 613 B1**
(45) Veröffentlichungstag und Bekanntmachung des Hinweises auf die Patenterteilung: **29.06.2022**
(21) Anmeldenummer: 19209852.3
(22) Anmeldetag: 18.11.2019
(51) Int. Cl.: G01B 7/16, D04B 35/10, D04B 27/10, D04B 37/06

(54) **SENSOR FÜR OBERFLÄCHENVERSCHLEISSMESSUNG**
SENSOR FOR SURFACE WEAR MEASUREMENT
CAPTEUR A MESURE DE L'USURE D'UNE SURFACE

(43) Veröffentlichungstag der Anmeldung: 15.01.2020
(73) Patentinhaber: KARL MAYER STOLL R&D GmbH, 63179 Obertshausen (DE)
(72) Erfinder: Arnold, Matthias, 63755 Alzenau (DE)
(74) Vertreter: Keil & Schaafhausen Patentanwälte PartGmbB

(56) Entgegenhaltungen:
- EP-A1- 0 456 126
- EP-A1- 2 573 537
- GB-A- 1 341 814
- GB-A- 2 534 191

## Beschreibung

Die vorliegende Erfindung bezieht sich auf eine Textilmaschine mit Komponenten, die in einem Kontakt mit Prozessmaterial sind, und einer Sensoranordnung, die Verschleiß der Komponenten überwacht.

Bisherige Textilmaschinen werden mittels optischer Sensoranordnungen überwacht. EP 0 456 126 B1 beschreibt eine solche optische Sensoranordnung zur Identifikation von Grobfehlern und Feinfehlern. Dazu werden die Nadeln immer wieder in einer selben Position optisch erfasst und mit Referenzen verglichen, um den Verschleiß der Nadeln zu ermitteln. Durch die hohe Frequenz der Textilmaschinen ist dieses Verfahren jedoch speicher- und rechenaufwendig, da je nach Frequenz der Nadeln große Datenmengen anfallen, die weiterverarbeitet werden müssen. Die Verarbeitung großer Datenmengen ist kostenintensiv und erfordert eine eigene Peripherie. Weiterhin besteht die Gefahr des Verschmutzens des optischen Sensors, was sich in Misinterpretationen des tatsächlichen Verschleißes niederschlagen kann.

EP 2 573 537 A1 beschreibt eine Testvorrichtung, die den Verschleiß feststellt den ein Garn, bzw. Prozessmaterial, verursacht. Dazu wird das Garn durch eine Anordnung verschiedener textilmaschinentypischer Vorrichtungen geführt und während dessen periodisch durch einen Verschleißkörper zusätzlich belastet, um die Verschleißgeschwindigkeit zu erhöhen. Durch die Belastung wird die Geschwindigkeit des Garns verlangsamt, wobei die Geschwindigkeit durch eine Bremskraft oder eine Abwickelgeschwindigkeit angepasst wird. Aus den gewonnenen Daten kann ein Verschleißkoeffizient einer Textilmaschine, der abhängig von der Beschaffenheit eines Garns ist, ermittelt werden.

GB 1 341 814 A beschreibt eine Anordnung zur Ermittlung von Oberflächenverschleiß. Dazu ist ein Element mit elektrischen Eigenschaften mit zwei Elektroden verbunden und auf einem Isolator angeordnet. Das Element schließt dabei mit der zu verschleißenden Oberfläche ab, sodass durch einen Oberflächenverschleiß das Element im gleichem Maß verschleißt. Durch den Verschleiß des Elements und der Oberfläche verändert sich die elektrische Eigenschaft, wodurch sich die elektrische Eigenschaft des Elements verändert. Aus der Veränderung können Rückschlüsse auf den Verschleiß der Oberfläche gezogen werden.

GB 2 534 191 A beschreibt einen Verschleißsensor, der in einem Gleitlager angeordnet ist. Dazu ist ein elektrisches Element auf einer Isolationsschicht angeordnet. Durch einen Verschleiß des Gleitlagers wird das Element mitverschlissen, wodurch sich die elektrischen Eigenschaften des Elements verändern Dadurch lässt sich der Verschleiß des Gleitlagers feststellen.

Die der Erfindung zugrundeliegende Aufgabe ist eine Erhöhung der Wirtschaftlichkeit.

Diese Aufgabe wird mit einer Textilmaschine nach Anspruch 1 gelöst.

Durch den Verschleiß des Sensorelements verändern sich seine elektrische Eigenschaften, die fortlaufend oder in zeitlichen Abständen ermittelt werden können. Da das Ermitteln elektrischer Eigenschaften keine großen Datenmengen zur Folge hat und auch keine Optik benötigt, die verschmutzen kann, ist dies eine wirtschaftliche Lösung zur Überwachung der Textilmaschine, Reduktion des Ausschussanteils und Vermeidung von Qualitätsmängeln.

Vorzugsweise ist die elektrische Eigenschaft der ohmsche Widerstand. Der ohmsche Widerstand lässt sich ohne komplizierte Messaufbauten messen und verändert sich entsprechend den Veränderungen eines leitenden Querschnittes. Weiterhin lassen sich Parameter exakt berechnen und somit ohne große experimentelle Versuchsreihen bestimmen.

Vorzugsweise umfasst die Textilmaschine einen ersten Speicher, der einen ersten ermittelten Wert speichert, und einen zweiten Speicher, der einen zweiten ermittelten Wert speichert, und einen Vergleicher, der den ersten Werte aus dem ersten Speicher mit dem zweiten Wert aus dem zweiten Speicher vergleicht. Durch den Vergleich der beiden genannten Werte lässt sich der Verschleiß des Sensorelementes bestimmen, woraus sich auf den tatsächlichen Verschleiß der Komponenten schließen lässt. Entsprechend des Verschleißes können weitere Maßnahmen abgeleitet werden. Dieser Vergleich verhindert, dass Komponenten über die Verschleißgrenze verschlissen werden, was wiederum die Möglichkeit von Fein- und Grobfehlern verringert. Die Wirtschaftlichkeit der Textilmaschine wird erhöht.

Vorzugsweise vergleicht der Vergleicher eine Differenz zwischen dem ersten Wert und dem zweiten Wert mit einem Schwellwert. Der Schwellwert zeigt an, ab welchem Zeitpunkt die Komponenten ihren Zenit erreicht haben und ein Austausche der entsprechenden Komponenten empfohlen wird. Durch einen rechtzeitigen Austausch der Komponenten lässt sich Ausschuss zuverlässig verhindern.

Vorzugsweise ist eine Verschleißdatenbank vorgesehen, die Vergleichswerte über Verschleiß in Abhängigkeit von Prozessparametern aufweist. Prozessparameter sind beispielsweise Prozessmaterial, Einsatzbedingungen, Materialgeschwindigkeit, Kontaktflächen an den fadenführenden Komponenten oder Maschinentypen. Der Vergleicher vergleicht einen ermittelten Wert mit Werten der Verschleißdatenbank. Durch diese Anordnung kann die Verschleißdatenbank immer weiter aktualisiert werden, was sich in einer Verbesserung der Vorhersagequalität niederschlägt. Eine bessere Vorhersagequalität ermöglicht eine gezieltere Wartung, die wiederum die Stillstandszeiten reduziert.

Vorzugsweise ist das Prozessmaterial als Garn, Faden, Seil, Vlies, Schnur, Draht, Litze, oder Kabel ausgebildet. Unterschiedliche Prozessmaterialien verursachen einen unterschiedlich hohen Verschleiß, der durch die Sensoreinheit ermittelt werden kann. Dementsprechend wird ein aufwendiges Umrüsten der Sensoreinheit vermieden, was die Rüstzeiten reduziert und somit die Wirtschaftlichkeit erhöht.

Vorzugsweise ist das Sensorelement auf einem nichtleitendem Basismaterial angeordnet. Bei einer passenden Dimensionierung des Sensormaterials zeigt die Durchtrennung des Sensormaterials den größtmöglichen zu messenden Verschleiß an. Das nichtleitende Basismaterials verhindert eine Überbrückung des Sensorelementes. Dadurch steigt der Widerstand bei Durchtrennung des Sensorelements schlagartig an, was wiederum ein Indiz für den größtmöglichen zu messenden Verschleiß ist. Es können daraufhin entsprechende Maßnahmen getroffen werden, die eine Ausschussproduktion verhindern.

Vorzugsweise ist das nichtleitende Basismaterial als Stab ausgeführt. Eine Ausführung als Stab ermöglicht eine leichte Montage, da Stäbe durch wenige Handgriffe ausgetauscht werden können. Weiterhin können Stäbe mittels Strangextrusion, Kunststoffspritzen, Sintern, 3D- Druck und oder ähnlichen Verfahren produziert werden, was die Produktionskosten der Stäbe gering hält.

Vorzugsweise ist ein Kontaktwinkel des Prozessmaterials auf dem Sensorelement größer als ein Kontaktwinkel des Sensorelements auf dem Basismaterial. Somit berühret das Prozessmaterial das Sensorelement von einer Seite bis zur anderen Seite. Dadurch wird die Gefahr eines überstehenden Anteils des Sensorelementes verhindert. Dies ermöglicht eine zielgerechte Auslegung des Sensorelements.

Vorzugsweise ist das Prozessmaterials quer zu seiner Bewegungsrichtung ortsfest in Bezug auf das Sensorelement angeordnet. Durch diese Anordnung wird ein flächiges Verschleißen des Sensorelementes verhindert. Durch den prozessmaterialinduzierten Verschleiß entsteht ein lokaler Verschleiß. Der lokale Verschleiß lässt sich anhand der Querschnittsänderung des Sensorelements genau bestimmen.

Vorzugsweise weist das Sensorelement eine Führung für das Prozessmaterial auf. Durch die Führung wird das Prozessmaterial quer zu seiner Laufrichtung ortsfest gehalten und ein lokaler Verschleiß des Sensorelements ermöglicht. Durch die gezielte lokale Abtragung wird der Querschnitt des Sensorelementes gezielt verändert. Dies ermöglicht eine exakte Bestimmung des Verschleißes der Komponenten.

Vorzugsweise sind mehrere Sensoranordnungen nebeneinander angeordnet. Üblicherweise ist bei einer Textilmaschine das Prozessmaterial nebeneinander angeordnet, beispielsweise in Form einer Fadenscharr. Die genannte Anordnung ermöglicht eine Überwachung aller oder zumindest eines Teils der prozessmaterialführenden Komponenten der Textilmaschine. Somit wird das Risiko einer Ausschussproduktion reduziert.

Vorzugsweise sind mehrere Sensorelemente auf dem gleichen Basismaterial angeordnet. Nachdem Komponenten getauscht wurden, kann somit das Basismaterial in eine neue Position überführt werden und die Überwachungsfunktion direkt wiederaufnehmen. Weiterhin wird durch ein erneutes Verwenden des Basismaterial die Umweltbelastung reduziert.

Die Erfindung wird im Folgenden anhand eines bevorzugten Ausführungsbeispiels in Verbindung mit der Zeichnung beschrieben. Hierin zeigen:
- Fig. 1: eine schematische Darstellung des Verlaufs des Prozessmaterials,
- Fig. 2: eine schematische Darstellung des Messprinzips anhand eines neuen Sensorelementes,
- Fig. 3: eine schematische Darstellung des Messprinzips anhand eines zum Teil verschlissenen Sensorelementes und
- Fig.4: eine schematische Darstellung des lokalen Verschleißes eines Sensorelementes.

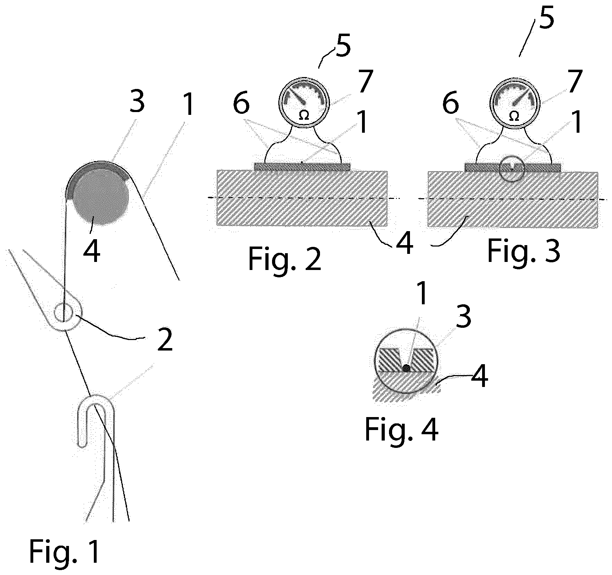

Fig. 1 zeigt eine schematische Darstellung des Verlaufs von Prozessmaterial 1 innerhalb einer Textilmaschine. Das Prozessmaterial 1 wird durch Komponenten 2, beispielsweise Wirkwerkzeuge einer Kettenwirkmaschine, und über ein Sensorelement 3, das auf einem Basismaterial 4 angeordnet ist, geführt. Dabei sind die Komponenten 2 und das Sensorelement 3 im Kontakt mit dem Prozessmaterial 1. Komponenten 2 sind prozessmaterialführende Elemente, beispielsweise Wirkwerkzeuge, die sowohl beweglich, als auch ortsfest angeordnet sein können. Das Sensorelement 3, welches auf einem Basismaterial 4 angeordnet ist, ist hingegen örtlich fixiert. Das Basismaterial 4 kann als Stab ausgebildet sein und kann aus nichtleitendem Material bestehen. Der Stab kann ein oder mehr Sensorelemente nebeneinander und ein oder mehr Sensorelemente in Umfangsrichtung des Stabes aufweisen. Der Querschnitt des Stabes kann entsprechend den Umständen angepasst werden und ist nicht auf eine runde Form fixiert.

In Fig. 2 ist eine Sensoranordnung 5 dargestellt, bei der das Sensorelement 3 in seinem Ursprungszustand ist. Das Prozessmaterial 1 läuft über das Sensorelement 3, das auf dem Basismaterial 4 angeordnet ist. Das Sensorelement 3 ist als elektrisch leitendes Element ausgeführt. Das Prozessmaterial 1 läuft auf dem Sensorelement 3 zwischen zwei Abnehmern 6, die das Sensorelement 3 mit einer Messvorrichtung 7 verbinden. In diesem Beispiel misst die Messvorrichtung 7 die elektrische Leitfähigkeit des Sensorelementes 3.

Fig. 3 stellt die Sensoranordnung 5 dar, bei der der Querschnitt des Sensorelements 3 durch einen prozessmaterialbedingten Verschleiß verringert ist. Durch einen verringerten Querschnitt verändern sich elektrische Eigenschaften des Sensorelements 3, die mittels der Abnehmer 6 durch die Messvorrichtung 7 ermittelt werden.

Fig. 4 zeigt eine Detailansicht des prozessmaterialbedingten Verschleißes an dem Sensorelement 3 dar. Es wird deutlich, dass durch den Verschleiß der Querschnitt des Sensorelementes 3 praktisch auf null verringert ist.

Durch eine Relativbewegung zwischen Prozessmaterial 1 und mit Prozessmaterial in Kontakt stehenden Komponenten 2 wird Verschleiß an den Komponenten 2 verursacht. Um diesen Verschleiß wirtschaftlich zu messen, wird die Sensoranordnung 5 in den Prozessmaterialverlauf integriert. Dazu wird das Prozessmaterial 1 über das Sensorelement 3 geführt, wodurch das Sensorelement 3 ebenfalls verschlissen wird. Durch den Verschleiß des Sensorelementes 3 verändert sich die elektrischen Eigenschaft des Sensorelements 3. Diese Änderung kann die Messvorrichtung 7 ermitteln und daraus einen Verschleiß des Sensorelementes 3 ermitteln. Aus dem Verschleiß des Sensorelements 3 kann man auf den Verschleiß der Komponenten 2 schließen. In diesem Beispiel ist die elektrische Eigenschaft der ohmsche Widerstand. Durch den Verschleiß des Sensorelementes 3 wird die elektrisch leitende Querschnittsfläche des Sensorelementes 3 verringert, wodurch sich der elektrische Widerstand des Sensorelementes 3 erhöht. Eine Veränderung des Widerstandes kann gemessen und der Verschleiß bestimmt werden. Für den Fall, dass das Sensorelement 3 soweit verschlissen ist, dass das Sensorelement 3 komplett durchtrennt ist, geht der gemessene Widerstand schlagartig gegen unendlich. Dies ist ein eindeutiges Indiz, dass eine gewisse Verschleißgrenze überschritten ist und weitere Maßnahmen ergriffen werden können. Auch ist es möglich ein Sensorelement 3 mit einer Notstopfunktion zu versehen, um Ausschussproduktionen zu vermeiden.

Für verschiedene Prozessmaterialien 1, wie Garn, Faden, Vlies, Schnur, Seil, etc. und unterschiedliche Einsatzbedingungen, wie Prozessmaterialgeschwindigkeit, Kontaktflächen der prozessmaterialführenden Komponenten und Maschinentypen können Referenzwerte erfasst und in einer Verschleißdatenbank hinterlegt werden. Entsprechende Referenzwerte, passend zu jeweiligen Prozessparametern, wie Prozessmaterial 1, der Einsatzbedingung, der Prozessmaterialgeschwindigkeit etc. können mit dem ermittelten Verschleiß des Sensorelementes 3 verglichen werden, um so rechtzeitig auf den tatsächlichen Verschleiß der Komponenten hinweisen zu können. Weiterhin wird durch die Vorhersagequalität der realen Verschleißbedingungen durch einen ständigen Lernprozess verbessert. Weiterhin kann das Sensorelement 3 entsprechend der Prozessparameter angepasst werden, indem beispielsweise das Sensorelement 3 eine gewisse Stärke aufweist, oder aus mehr oder minder verschleißfesten Material besteht. Beispielsweise kann das Sensorelement 3 so ausgelegt werden, dass das Sensorelement 3 verschlissen ist, sobald Komponenten 2, wie beispielsweise Nadeln, einen Prozentsatz ihrer Verschleißgrenze erreicht haben. Ein solcher Prozentsatz kann bei beispielsweise 80 % liegen. Für das Sensorelementmaterial kann ein Material gewählt werden, wobei das Verschleißverhalten des Material des Sensorelements 3 abhängig von dem Verschleißverhalten der Komponenten 2 ist. Das Sensorelementmaterial könnte beispielsweise doppelt so schnell verschleißen, wie das Material der Komponenten 2. Andere Verhältnisse sind ebenso möglich. In jedem Fall sollte bei der Auslegung des Sensorelementes 3 beachtet werden, dass das Sensorelement 3 verschlissen ist, bevor Komponenten 2 verschlissen sind. Dies bietet eine größere Sicherheit, als ein maximaler Wert des Widerstands, da der Widerstand bei einem durchtrennten Sensorelement einen Wert annimmt, der gegen Unendlich geht. Die Messvorrichtung 7 kann unabhängig von ihrer Auflösung einen durchtrenntes Sensorelement 3 sicher detektieren und somit weitere Maßnahmen auslösen.

## Patentansprüche

1. Textilmaschine mit Komponenten (2), die in einem Kontakt mit Prozessmaterial (1) sind, und einer Sensoranordnung (5), die Verschleiß der Komponenten (2) überwacht, **dadurch gekennzeichnet, dass** die Sensoranordnung (5) ein Sensorelement (3), das in Kontakt mit dem Prozessmaterial (1) ist und durch eine Relativbewegung zwischen dem Prozessmaterial (1) und dem Sensorelement (3) verschleißt, wobei sich eine elektrische Eigenschaft des Sensorelementes (3) durch Verschleiß verändert und eine Vorrichtung (7) zur Ermittlung der elektrischen Eigenschaft aufweist, wobei das Sensorelement (3) auf einem Basismaterial (4) angeordnet ist und getrennt von den Komponenten (2) ausgebildet ist, und wobei die Vorrichtung geeignet ist aus der Änderung der elektrischen Eigenschaften einen Verschleiß des Sensorelements (3) zu ermitteln und aus dem Verschleiß des Sensorelements (3) auf den Verschleiß der Komponenten (2) schließbar ist.

2. Textilmaschine nach Anspruch 1 **dadurch gekennzeichnet, dass** die elektrische Eigenschaft der ohmsche Widerstand ist.

3. Textilmaschine nach einem der vorangegangenen Ansprüche **dadurch gekennzeichnet, dass** ein erster Speicher einen ersten ermittelten Wert speichert und ein zweiter Speicher einen zweiten ermittelten Wert speichert und ein Vergleicher den Wert aus dem ersten Speicher mit dem Wert aus dem zweiten Speicher vergleicht.

4. Textilmaschine nach Anspruch 3 **dadurch gekennzeichnet, dass** der Vergleicher eine Differenz zwischen dem ersten Wert und dem zweiten Wert mit einem Schwellwert vergleicht.

5. Textilmaschine nach Anspruch 3 oder 4 **dadurch gekennzeichnet, dass** eine Verschleißdatenbank vorgesehen ist, die Vergleichswerte über Verschleiß in Abhängigkeit von Prozessparameter aufweist.

6. Textilmaschine nach einem der vorangegangen Ansprüche **dadurch gekennzeichnet, dass** das Prozessmaterial (1) als Garn, Faden, Seil, Vlies, Schnur, Draht, Litze, oder Kabel ausgebildet ist.

7. Textilmaschine nach einem der vorangegangenen Ansprüche **dadurch gekennzeichnet, dass** das Sensorelement (3) auf einem nichtleitendem Basismaterial (4) angeordnet ist.

8. Textilmaschine nach einem der vorangegangen Ansprüche **dadurch gekennzeichnet, dass** das nichtleitende Basismaterial (4) als Stab ausgeführt ist.

9. Textilmaschine nach einem der vorangegangenen Ansprüche **dadurch gekennzeichnet, dass** ein Kontaktwinkel des Prozessmaterials (1) auf dem Sensorelement (3) größer ist, als ein Kontaktwinkel des Sensorelementes (3) auf dem Basismaterial (4).

10. Textilmaschine nach einem der vorangegangen Ansprüche **dadurch gekennzeichnet, dass** das Prozessmaterial (1) quer zu seiner Bewegungsrichtung ortsfest in Bezug auf das Sensorelement (3) angeordnet ist.

11. Textilmaschine nach Anspruch 10 **dadurch gekennzeichnet, dass** das Sensorelement (3) eine Führung für das Prozessmaterial (1) aufweist.

12. Textilmaschine nach einem der vorangegangenen Ansprüche **dadurch gekennzeichnet, dass** mehrere Sensoranordnungen (5) nebeneinander angeordnet sind.

13. Textilmaschine nach einem der vorangegangen Ansprüche **dadurch gekennzeichnet, dass** mehrere Sensorelemente (3) auf dem gleichen Basismaterial (4) angeordnet sind.

## Claims

1. Textile machine with components (2) which are in contact with process material (1), and a sensor arrangement (5), which monitors wear on the components (2), **characterized in that** the sensor arrangement (5) comprises a sensor element (3) which is in contact with the process material (1) and which undergoes wear to a relative movement between the process material (1) and the sensor element (3), wherein an electrical property of the sensor element (3) changes due to wear, and a device (7) for determining the electrical property, wherein the sensor element (3) is arranged on a base material (4) and is formed separately from the components (2), wherein the device is capable to determine wear of the sensor element (3) from the change in electrical properties and it is possible to draw conclusions from the wear of the sensor element (3) as to the wear of the components (2).

2. Textile machine according to claim 1, **characterized in that** the electric property is the ohmic resistance.

3. Textile machine according to any of the preceding claims, **characterized in that** a first memory stores a first determined value and a second memory stores a second determined value and a comparator compares the value from the first memory with the value from the second memory.

4. Textile machine according to claim 3, **characterized in that** the comparator compares the difference between the first value and the second value with a threshold value.

5. Textile machine according to claim 3 or 4, **characterized in that** a wear data base is provided, which includes comparative values of wear depending on process parameters.

6. Textile machine according to any of the preceding claims, **characterized in that** the process material (1) is constituted as yarn, thread, rope, non-woven fabric, cord, wire, flexible lead, or cable.

7. Textile machine according to anyone of the preceding claims, **characterized in that** the sensor element (3) is arranged on a non-conductive base material (4).

8. Textile machine according to any of the preceding claims, **characterized in that** the non-conductive base material (4) is designed as a rod.

9. Textile machine according to any of the preceding claims, **characterized in that** a contact angle of the process material (1) on the sensor element (3) is greater than a contact angle of the sensor element (3) on the base material (4).

10. Textile machine according to any of the preceding claims, **characterized in that** the process material (1) is arranged crosswise to a direction of movement fixed in relation to the sensor element (3).

11. Textile machine according to claim 10, **characterized in that** the sensor element (3) comprises a guide for the process material (1).

12. Textile machine according to any of the preceding claims, **characterized in that** a plurality of sensor arrangements (5) is arranged beside one another.

13. Textile machine according to any of the preceding claims, **characterized in that** a plurality of sensor elements (3) is arranged on the same base material (4).

## Revendications

1. Machine textile avec des composants (2), qui sont en contact avec un matériau à traiter (1) et un système de détection (5), qui surveille l'usure des composants (2), **caractérisée en ce que** le système de détection (5) comporte un élément détecteur (3), qui est en contact avec le matériau à traiter (1) et s'use par un mouvement relatif entre le matériau à traiter (1) et l'élément détecteur (3), sachant qu'une propriété électrique de l'élément détecteur (3) est modifiée par usure et comporte un dispositif (7) pour la détermination de la propriété électrique, sachant que l'élément détecteur (3) est disposé sur un matériau de base (4) et est constitué séparé des composants (2), et sachant que le dispositif est adapté pour déterminer une usure de l'élément détecteur (3) à partir de la modification des propriétés électriques et peut être fermé en raison de l'usure de l'élément détecteur (3) basée sur l'usure des composants (2).

2. Machine textile selon la revendication 1, **caractérisée en ce que** la propriété électrique est la résistance ohmique.

3. Machine textile selon l'une quelconque des revendications précédentes, **caractérisée en ce qu'**une première mémoire mémorise une première valeur déterminée et une deuxième mémoire mémorise une deuxième valeur déterminée et un comparateur compare la valeur de la première mémoire à la valeur de la deuxième mémoire.

4. Machine textile selon la revendication 3, **caractérisée en ce que** le comparateur compare une différence entre la première valeur et la deuxième valeur à une valeur seuil.

5. Machine textile selon la revendication 3 ou 4, **caractérisée en ce qu'**une banque de données d'usure est prévue, qui comporte les valeurs de comparaison relatives à l'usure en fonction des paramètres du processus de traitement.

6. Machine textile selon l'une quelconque des revendications précédentes, **caractérisée en ce que** le matériau à traiter (1) est constitué sous la forme d'un fil, de brins, de corde, de non-tissé, de ficelle, de fil métallique, de cordon ou de câble.

7. Machine textile selon l'une quelconque des revendications précédentes, **caractérisée en ce que** l'élément détecteur (3) est disposé sur un matériau de base (4) non conducteur.

8. Machine textile selon l'une quelconque des revendications précédentes, **caractérisée en ce que** le matériau de base (4) non conducteur est exécuté sous la forme d'une barrette.

9. Machine textile selon l'une quelconque des revendications précédentes, **caractérisée en ce qu'**un angle de contact du matériau à traiter (1) est plus grand sur l'élément détecteur (3) qu'un angle de contact de l'élément détecteur (3) sur le matériau de base (4).

10. Machine textile selon l'une quelconque des revendications précédentes, **caractérisée en ce que** le matériau à traiter (1) est disposé de façon fixe transversalement à sa direction de déplacement par rapport à l'élément détecteur (3).

11. Machine textile selon la revendication 10, **caractérisée en ce que** l'élément détecteur (3) comporte un système de guidage pour le matériau à traiter (1).

12. Machine textile selon l'une quelconque des revendications précédentes, **caractérisée en ce que** plusieurs systèmes de détection (5) sont disposés les uns à côté des autres.

13. Machine textile selon l'une quelconque des revendications précédentes, **caractérisée en ce que** plusieurs éléments détecteurs (3) sont disposés sur le même matériel de base (4).
